## Europäisches Patentamt

## European Patent Office

## Office européen des brevets

(11) Numéro de publication: **0 093 676**

**B1**

(12) **FASCICULE DE BREVET EUROPÉEN**

(45) Date de publication du fascicule du brevet:
03.09.86

(21) Numéro de dépôt: **83400912.8**

(22) Date de dépôt: **05.05.83**

(51) Int. Cl.⁴: **F 16 K 17/18**

(54) **Soupape à double effet notamment pour réguler la pression interne d'un conteneur.**

(30) Priorité: **05.05.82 FR 8207813**

(43) Date de publication de la demande:
**09.11.83 Bulletin 83/45**

(45) Mention de la délivrance du brevet:
**03.09.86 Bulletin 86/36**

(84) Etats contractants désignés:
**AT BE CH DE GB IT LI LU NL SE**

(56) Documents cité:
**DE-C-755 309**
**FR-A-1 591 082**
**GB-A-589 815**
**GB-A-1 557 504**
**US-A-2 166 730**
**US-A-3 811 466**

(73) Titulaire: **LHOTELLIER MONTRICHARD Société Anonyme dite:, F-41400 Montrichard (FR)**

(72) Inventeur: **Lhotellier, Philippe, 8 Quai du Cher, F-41400 Montrichard (FR)**
Inventeur: **Ricoux, Alain, La Faubourderie Chissay en Touraine, F-41400 Montrichard (FR)**

(74) Mandataire: **Bonnetat, Christian, Cabinet PROPI Conseils 23 rue de Léningrad, F-75008 Paris (FR)**

LIBER, STOCKHOLM 1986

## Description

La présente invention concerne une soupape du type à double effet et permettant de réguler la différence de pression entre deux milieux qui sont susceptibles de variations de pression.

L'invention sera particulièrement applicable à la régulation de pression au sein d'un conteneur et dont le milieu intérieur doit donc être isolé du milieu extérieur, mais dont la pression interne ne doit pas présenter par rapport à la pression atmosphérique extérieure des variations dépassant un seuil prédéterminé.

Et l'invention sera décrite en rapport avec cette application particulière, sans y être spécifiquement associée; en fait, la soupape à double effet selon l'invention peut être utilisée en toutes circonstances pour assurer la régulation de l'équilibrage des pressions entre deux milieux séparés l'un de l'autre, mais dont la différence de pression doit être maintenue à l'intérieur d'une limite prédéterminée; et la soupape assure, dans des conditions particulièrement simples et efficaces une telle régulation en permettant le passage de l'atmosphère ou du fluide gazeux d'un premier milieu vers le second en cas de surpression du premier milieu par rapport au second, surpression dépassant ainsi un seuil défini; tandis que la soupape assurera inversement et dans les mêmes conditions l'équilibrage de la différence de pression en assurant le passage du fluide gazeux du second milieu vers le premier en cas de surpression du second milieu par rapport au premier.

Ainsi qu'on l'a indiqué l'invention sera particulièrement applicable pour assurer la fermeture étanche d'un conteneur sous forme de caisson isolé du milieu extérieur mais dont la pression interne ne doit pas présenter, par rapport à la pression atmosphérique externe, une différence excédant un seuil prédéterminé.

On comprend que le conteneur caisson, étant appelé à voyager dans des circonstances variables, peut se trouver exposé à des différences de pression dans le cadre par exemple d'un voyage aérien à haute altitude (surpression interne par rapport à la pression atmosphérique externe faible à haute altitude); si le caisson se trouve exposé au soleil, l'effet de serre engendré dans l'espace interne du caisson peut également entraîner une élévation thermique et par conséquent une surpression interne.

Dans tous ces cas, si le caisson est fermé de façon étanche et sans possibilité de régulation, on risqué d'aboutir à des contraintes sur les parois du caisson dépassant le seuil pour lequel les parois ont été conçues avec un risque d'éclatement ou de fissuration.

Et inversement, si le caisson a été refermé dans uns ambiance chaude et humide (par exemple an zone tropicale) l'arrivée du caisson dans une zone froide avec condensation de l'humidité peut aboutir a une forte dépression de l'atmosphère interne du caisson avec les mêmes inconvénients.

On a prévu à cet effet d'équiper de tels conteneurs de valves double effet, permettant d'équilibrer la pression interne du conteneur lorsque la différencé de pression par rapport au milieu extérieur dépasse une valeur préréglée.

Ainsi on évite constamment d'exposer le conteneur à une différence de pression qui exercerait des contraintes excessives sur les parois ou les dispositifs d'étanchéité.

On connaît par le brevet US-A-3 811 466 un dispositif formant soupape double effet et constitué d'une fente dans une membrane séparant les deux milieux, ladite membrane pouvant être associée d'un côté ou de l'autre, ou des deux coôtés, à cercle réducteur limitant la longueur active de la fente.

Le brevet DE-C-755 309 décrit une soupape double effet du type à membrane pourvue d'une fente, la membrane étant positionnée dans un corps de soupape formant manchon inséré dans une lumière pratiquée dans la paroi séparant les deux milieux.

L'invention permet de réaliser dans des conditions particulièrement simples, économiques et efficaces une valve ou soupape à double effet permettant un rééquilibrage des pressions entre deux milieux avec des commodités de régulation et d'ajustement de la différence de pression pour laquelle la valve est réglée en partant d'un dispositif identique et facilement modifié pour adapter à chaque cas particulier la différence de pression au-delà de laquelle la valve assurera l'effet d'équilibrage en ramenant la différence de pression à son niveau maximum admissible.

La soupape selon l'invention, apte à être interposée entre deux milieux qui sont susceptibles de variations de pression relatives, en assurant l'isolation des deux milieux l'un par rapport à l'autre en dessous d'une différence de pression relative correspondant à un seuil déterminé, la soupape assurant au contraire la communication entre les deux milieux au-delà d'une différence de pression excédant ledit seuil, est du type comportant une feuille en matériau élastiquement déformable, pourvue d'une fente, chaque face de la feuille étant en communication avec un des deux milieux, la déformation de la feuille sous l'effet de la difference de pression entre les deux faces, au-delà d'une certaine valeur, entraînant l'ouverture de la fente et la communication des milieux, et elle est caractérisée d'une part en ce qu'elle est constituée d'un corps de soupape formant manchon inséré, avec interposition de moyens d'étanchéité, dans une lumière de format correspondant et pratiquée dans la paroi séparant les deux milieux, la feuille élastiquement déformable ou membrane étant mise en place transversalement à l'intérieur dudit corps de soupape, cette membrane étant emprisonnée par sa périphérie entre deux épaulements tels que des couronnes formant un cadre de maintien bloquant le périmètre circulaire de la membrane, et solidarisée à l'intérieur de l'alésage du manchon, et d'autre part en ce qu'elle comporte une pluralité d'organes de calage venant porter sur une face de la membrane au moins au niveau de la fente et aptes à réduire la longueur active de ladite fente dont une partie est calée et bloquée par lesdits organes de calage, ces derniers étant prévus amovibles et l'enlèvement d'un ou plusieurs organes de calage permettant d'ajuster la liberté de mouvement de la membrane et le seuil de réponse et d'ouverture de cette dernière aux différences de pression.

Ces organes de calage étant amovibles on peut ajuster le seuil de réponse et tarer la soupape.

D'autres caractéristiques de l'invention ressortiront de la description qui suit et se référant aux dessins annexés.

La figure 1 est une vue en plan de la membrane pourvue d'organes de calage linéaires.

La figure 2 est une vue d'une variante dans laquelle les organes de calage sont des cercles concentriques.

La figure 3 est une vue en coupe des cercles de calage de la figure 2.

La figure 4 est une vue en coupe d'une soupape avec couvercle de protection et poussoir de décompression.

Selon l'ensemble des figures on voit que la soupape est essentiellement constituée d'une membrane 1 ou feuille en matériau élastoplastique, par exemple élastomère tel que caoutchouc naturel ou synthétique, silicone, et cette feuille est insérée dans un cadre de telle façon que ces deux faces 2, 2' soient immobilisées et pincées entre les épaulements jumelés 3 et 4, constituant un cadre de préférence circulaire bloquant le périmètre circulaire de la membrane 1.

Cette membrane comporte une fente 5 disposée selon un diamètre du cadre circulaire 3, 4.

Une surpression du côté de la face 2 de la membrane 1 entraîne une incurvation de cette dernière vers la face 2' en dépression; dans un premier temps la déformation de la membrane reste insuffisante pour entraîner le décollement des deux lèvres de la fente 5.

Une surpression plus importante exercée sur la face 2 de la membrane 1, entraine une déformation plus forte de la membrane, telle que les lèvres arrivent à se séparer et l'air ou le fluide gazeux situé du côté de la face 2 de la membrane s'échappe en direction de l'espace situé du côté de la face opposée 2'.

Dés lors, la pression du côté de la face 2, par suite de l'échappement d'une partie de l'air ou du gaz, tombe, tandis que la pression du côté de la face 2' est accrue de sorte que la dépression entre les deux côtés de la membrane est ramenée à une valeur inférieure à la valeur précédente, ce qui provoque par conséquent le mouvement de rétraction et de refermeture sur elle-même de la fente dont les deux lèvres viennent alors à nouveau en contact en occultant par conséquent le passage de sorte que les deux milieux 7 et 7' correspondant aux espaces situés en regard de chaque face 2 et 2' de la membrane sont à nouveau isolés.

On comprend que le mouvement peut être effectué dans les deux sens et ainsi la soupape joue son rôle de régulateur double effet en assurant l'isolement des deux milieux l'un par rapport a l'autre tant que la différence de pression entre les deux milieux n'excède pas une valeur déterminée. Pour des différences de pression inférieures au seuil préréglé, la membrane se déforme et les deux lèvres s'écartent en partie en formant un V, mais elles restent conjuguées l'une à l'autre en maintenant occulté le passage; lorsque la différence de pression excède la valeur prévue, la déformation de la membrane se traduit par une solution de continuité entre les deux lèvres laissant le passage à l'air en diminuant ainsi la différence de pression entre les deux côtés de la membrane, cette différence de pression est ramenée automatiquement a la valeur voulue pour laquelle le passage reste occulté.

Lorsque l'on veut, par exemple après la fermeture étanche du conteneur ou avant l'ouverture de ce dernier, equilibrer exactement les pressions, il est possible d'agir sur le poussoir 8 (Figure 4), qui est normalement repoussé en position inactive grâce au ressort 9, et le doigt plongeoir entraîne une déformation provoquée de la membrane en ouvrant largement la fente et en permettant par conséquent l'équilibrage des pressions entre les deux milieux, ce qui permet d'amener le conteneur à la pression adéquate lors de l'ouverture et/ou de la fermeture.

Selon l'invention, on peut régler de façon precise le tarage de la soupape, c'est-à-dire la valeur de la différence de pression pour laquelle la soupape doit s'ouvrir en ramenant la différence de pression entre les deux milieux exactement en dessous du seuil préréglé.

On peut déjà tarer la soupape en utilisant une membrane 1 d'épaisseur appropriée; en effet suivant la différence d'épaisseur de chaque membrane on obtient des comportements, notamment des résiliences ou des taux d'élasticité différents tels que la membrane réagira de façon plus ou moins élastique ou souple à une différence de pression.

On peut également tarer le jeu de la soupape en utilisant des membranes de matériaux différents équipant un même corps de soupape.

L'invention permet de réaliser en série des soupapes qui sont aptes à être montées sur des parois séparant deux milieux (par exemple la paroi d'un conteneur séparant la capacité intérieure de l'atmosphère extérieure); et ces soupapes standard sont donc susceptibles au moment de leur mise en place et par un simple réglage et ajustement dans des conditions décrites ci-après, de définir le tarage de la soupape en fonction des conditions d'utilisation et des différences de pression en dessous desquelles la soupape peut rester inactive et au-delà desquelles elle doit permettre une communication limitée permettant d'abaisser, en-dessous du seuil, la différence de pression.

L'avantage de l'invention est donc de permettre la fabrication en grande série d'un appareil a fonctions polyvalentes susceptible d'être adapté aux différentes gammes de besoins au moment de l'utilisation et par une simple manoeuvre à la portée de l'utilisateur.

A cet effet, on a prévu des dispositifs de calage de la membrane qui réduisent son diamètre actif, c'est-à-dire la longueur de la fente.

On comprend que plus la longueur active de la fente est réduite, et plus faible est la possibilité de manoeuvre de la membrane; c'est-à-dire qu'il faudra une différence de pression très élevée pour aboutir à une déformation correspondante à l'ouverture des lèvres.

Ainsi, la soupape est donc livrée à l'état standard à une capacité de tarage maximum correspondant par conséquent à un seuil de pression élevé.

Et les dispositifs de calage sont, selon l'invention, multiples et détachables, de sorte que l'utilisateur peut en fonction des besoins dégager un ou plusieurs des dispositifs de calage pour faire descendre le seuil de réponse et retrouver une gamme de tarage appropriée.

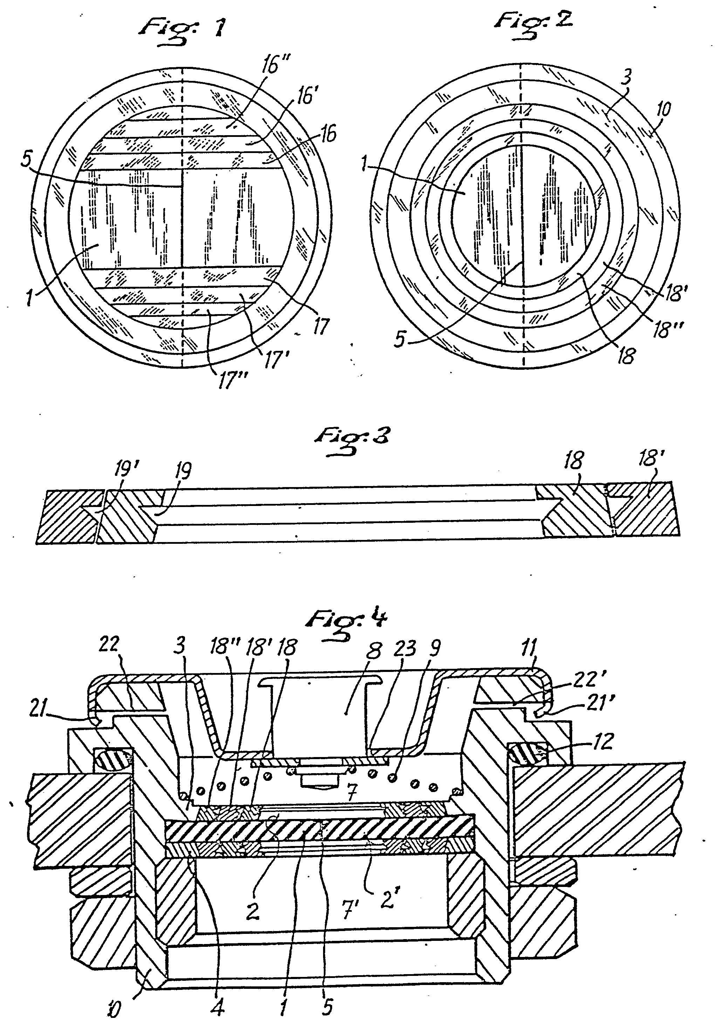

Selon les figures 1, 2, 3 et 4, on voit que les épaulements de maintien de la membrane 1, par exemple les couronnes 3 et 4, supportent par leurs parois cylindriques intérieures une pluralité d'organes de calage 16, 16', 16'', 17, 17', 17'', 18, 18', 18'', venant porter sur une face de la membrane au moins au niveau de la fente 5 et aptes à réduire la longueur active de ladite fente dont une partie est calée et bloquée par lesdits organes de calage. On modifie ainsi la liberté de déformation de la membrane et on abaisse le seuil de pression susceptible de provoquer l'ouverture de la soupape; lesdits organes de calage sont prévus amovibles.

Selon une forme de réalisation qui est représentée à la figure 1, les organes de calage 16, 16', 16'', 17, 17', 17'', occupent une plage correspondant sensiblement à un segment de cercle dont la corde est positionnée perpendiculairement à la fente 5.

Ces organes de calage sont bloqués à l'intérieur de la couronne 3 et ils sont bloqués les uns contre les autres, par exemple par un léger fruit s'opposant au dégagement spontané des barrettes constituant des organes de calage individuels; mais il est possible par une opération manuelle de dégager individuellement chacune des barrettes 16, 16', 16'', 17, 17', 17'', en alongeant à chaque fois la longueur opérationnelle de la fente 5.

On comprend que ces dispositifs de calage peuvent être positionnés sur une seule des faces de la membrane 1, ou sur les deux faces; dans le premier cas, on limite le débattement de la membrane dans une direction de sorte que dans cette direction le seuil de réponse est élevé; dans l'autre sens, c'est-à-dire dans le sens d'une déformation convexe de la face non pourvue de calage, le seuil de réponse est plus bas et la soupape s'ouvrira dans cette direction en cas de surpression s'exerçant sur l'autre paroi, à un niveau plus faible que celui qui est nécessaire pour l'ouverture dans la direction pourvue des organes de calage.

La figure 2 montre une variante de réalisation qui répond au même principe et dans laquelle les organes de calage sont constitués d'une pluralité de cercles 18, 18', 18'', qui sont indépendants les uns des autres, tout en étant bloqués mutuellement de façon amovible, l'enlèvement de chaque cercle, à partir du cercle le plus central, accroissant le diamètre actif de la fente, et abaissant par conséquent le seuil de pression apte à provoquer l'ouverture de la soupape depuis la paroi opposée.

Comme on le voit sur la figure 3, les cercles concentriques de calage sont de préférence encastrés, chaque cercle étant ainsi apte à être dégagé volontairement par l'utilisateur et à cet effet, chaque cercle comporte des moyens de prise, par exemple sous forme d'une encoche ou rainure intérieure 19, 19' pour faciliter son dégagement.

L'enlèvement et la séparation des cercles pourraient également être obtenus à partir d'un ergot faisant prise sur une face extérieure pour permettre la préhension et le dégagement du cercle de calage.

Selon une variante non représentée, les cercles concentriques réalisés en matériau synthétique sont venus de moulage d'une seule pièce; ils sont reliés les uns aux autres par des ponts de matière susceptibles d'être brisés par l'utilisateur lors de la mise en service, afin de dégager un ou plusieurs des cercles à partir du cercle central, le dégagement des cercles définissant la longueur active de la fente et par conséquent le seuil de réponse de la soupape.

La figure 4 représente une vue d'une soupape pourvue du poussoir 8 maintenu en position écartée par le ressort 9, la membrane 1 étant associée à une pluralité de cercles de calage tels que représentés aux figures 2 et 3.

L'invention concerne d'une façon générale une soupape à membrane du type précisé ci-dessus et associée sur au moins une face de la membrane à un dispositif de calage susceptible par manoeuvre de l'utilisateur de venir en position d'appui sur une surface plus ou moins étendue de la membrane en réglant ainsi la longueur active de la fente 5 et par conséquent le seuil de pression nécessaire pour provoquer l'ouverture des lèvres.

Selon une variante non représentée au dessin, le dispositif de calage pourrait être constitué d'une lame enroulée en ressort hélicoïdal et spiraliée reposant par sa base sur une face de la membrane et supportant l'appui, par son extrémité opposée, d'un écrou réglable coopérant avec le filetage du manchon pour repousser le ressort vers la membrane, le serrage de l'écrou provoquant l'appui d'un nombre de spires croissant du ressort, et réduisant en conséquence le diamètre actif de la fente.

On voit selon la figure 4 que le manchon 10 est avantageusement protégé par un couvercle 11 qui coiffe l'extrémité du manchon, tournée vers l'extérieur. Le couvercle 11 est prévu avec une cuvette centrale 20 elle-même percée d'une lumière 23 pour le passage et le guidage d'un poussoir ou doigt plongeur 8 rappelé par le ressort 9 dans une position extérieure et dégagée par rapport à membrane en position de repos, le doigt 8 étant apte à être repoussé vers la membrane pour provoquer l'ouverture de cette dernière et obtenir une communication volontaire entre les deux milieux 7 et 7' séparés par ladite membrane; le couvercle 11 s'oppose à la pénétration de précipitations ou corps étrangers dans le corps de soupape et comporte des ouvertures ou canaux de mise en communication 21, 21' d'une face de la membrane avec le milieu qui lui correspond.

De préférence, le couvercle comporte un rebord périphérique enveloppant l'extrémité du manchon 10, sur lequel ledit couvercle prend appui et pourvu des ouvertures 21, 21', l'extrémité du manchon comportant des canaux 22, 22' pour la communication du milieu extérieur avec une face de la membrane.

**Revendications**

1. Soupape du type double effet apte à être interposée entre deux milieux (7, 7') qui sont susceptibles de variations de pression relatives, la soupape assurant l'isolation des deux milieux (7, 7') l'un par rapport à l'autre en dessous d'une différence de pression relative correspondant à un seuil déterminé, la soupape assurant au contraire la communication entre les deux milieux (7, 7') au-delà d'une différence de pression excédant ledit seuil, du type comportant une feuille (1) en matériau élastiquement déformable, pourvue d'une fente (5), chaque face (2, 2') de la feuille (1) étant en communication avec un des deux milieux (7, 7'), la déformation de la feuille (1) sous l'effet de la différence de pression entre les deux faces, au-delà d'une certaine valeur, entraînant l'ouverture de la fente (5) et la mise en communication des deux milieux (7, 7'), caractérisée d'une part en ce qu'elle est constituée d'un corps de soupape formant manchon (10) inséré, avec interposition de moyens d'étanchéité (12), dans une lumière de format correspondant et pratiquée dans la paroi séparant les deux milieux, la feuille élastiquement déformable ou membrane (1) étant mise en place transversalement à l'intérieur dudit corps de soupape (10), cette membrane étant emprisonnée par sa périphérie entre deux épaulements tels que des couronnes (3, 4) formant un cadre de maintien bloquant le périmètre circulaire de la membrane, et solidarisée à l'intérieur de l'alésage du manchon (10), et d'autre part en ce qu'elle comporte une pluralité d'organes de calage (16, 16', 16'', 17, 17', 17'', 18, 18', 18'') venant porter sur une face de la membrane au moins au niveau de la fente (5) et aptes à réduire la longueur active de ladite fente dont une partie est calée et bloquée par lesdits organes de calage, ces derniers étant prévus amovibles et l'enlèvement d'un ou plusieurs organes de calage permettant d'ajuster la liberté de mouvement de la membrane et le seuil de réponse et d'ouverture de cette dernière aux différences de pression.

2 - Soupape selon la revendication 1, caractérisé en ce que les parois intérieures et extérieures du manchon formant corps de vanne comportent des filetages propres à recevoir les éléments de fixation extérieurs, tels que les bagues (11, 14) et les couronnes (3, 4) formant cadre intérieur de blocage périphérique de la membrane.

3 - Soupape selon l'une des revendications 1 ou 2, caractérisée en ce que les organes de calages sont constitués d'une pluralité de cercles (18, 18', 18'',) qui sont indépendants les uns des autres, tout en étant bloqués mutuellement de façon amovible, l'enlèvement de chaque cercle, à partir du cercle le plus central, accroissant le diamètre actif de la fente, et abaissant par conséquent le seuil de pression apte à provoquer l'ouverture de la soupape depuis la paroi opposée.

4 - Soupape selon la revendication 1, 2 ou 3, caractérisée en ce que les organes de calage sont bloqués mutuellement par exemple par un léger fruit de leur paroi en regard, s'opposant à leur dégagement spontané, tout en permettant leur dégagement à force par simple traction.

5 - Soupape selon la revendication 3 ci-dessus, caractérisée en ce que les organes de calage sont formés de cercles concentriques réalisés en matériau synthétique et ils sont venus de moulage d'une seule pièce, restant reliés par des ponts de matière susceptibles d'être brisés par l'utilisateur lors de la mise en service, afin de dégager un ou plusieurs des cercles à partir du cercle central, le dégagement des cercles définissant la longueur active de la fente et par conséquent le seuil de réponse de la soupape.

6 - Soupape selon l'une des revendications 1 à 5, caractérisée en ce que les organes de calage (18, 18') comportent des moyens de prises telles qu'une encoche ou rainure (19, 19') permettant leur dégagement par l'utilisateur.

7 - Soupape selon l'une des revendications 1 à 6, caractérisée en ce que la membrane est en élastomère silicone et son épaisseur est comprise entre 2 et 7 mm.

8 - Soupape selon l'une des revendications 1 à 7, caractérisée en ce que le manchon (10) est recouvert par un couvercle (11) prévu avec une cuvette centrale (20), elle-même percée d'une lumière (23) pour le passage et le guidage d'un poussoir ou doigt plongeur (8) rappelé par un ressort (9) dans une position extérieure et dégagée par rapport à la membrane en position de repos, le doigt (8) étant apte à être repoussé vers la membrane pour provoquer l'ouverture de cette dernière et obtenir une communication volontaire entre les deux milieux séparés par ladite membrane, le couvercle (11) s'opposant à la pénétration de précipitations ou corps étrangers dans le corps de soupape et comporte des ouvertures ou canaux de mise en communication (21, 21') d'une face de la membrane avec le milieu qui lui correspond.

9 - Soupape selon la revendication 8, caractérisée en ce que le couvercle (11) comporte un regard périphérique enveloppant l'extrémité du manchon (10) sur lequel ledit couvercle prend appui et pourvu des ouvertures (21, 21'), l'extrémité du manchon comportant des canaux (22, 22') pour la communication du milieu extérieur avec une face de la membrane.

## Patentansprüche

1. Ventil mit Doppelwirkung zum Einsetzen zwischen zwei Medien (7, 7'), die relativen Druckschwankungen ausgesetzt sein können, wobei das Ventil die Isolierung beider Medien von einander unterhalb einer relativen Druckdifferenz gewährleistet, die einem bestimmten Schwellenwert entspricht, das Ventil demgegenüber die Verbindung zwischen beiden Medien (7, 7') über eine Druckdifferenz hinaus, die den Schwellenwert übersteigt, sichert und wobei das Ventil so ausgebildet ist, daß es ein Blatt (1) aus elastisch verformbaren Werkstoff, in dem ein Spalt (5) vorgesehen ist, aufweist, und dessen beide Seiten (2, 2') mit den beiden Medien (7, 7) in Verbindung stehen, wobei die Verformung des Blattes (1) unter der Einwirkung der Druckdifferenz auf den beiden Seiten über einen bestimmten Wert hinaus dazu fuhrt, daß sich der Spalt (5) öffnet und beide Medien (7, 7') miteinander in Verbindung treten läßt, dadurch gekennzeichnet, daß einerseits Bestandteil des Ventils eine Hülse (10) ist, die mit zwischengelegten Dichtungsmitteln (12) in eine entsprechend ausgebildete Ausnehmung eingeführt ist, die in die die beiden Medien voneinander trennende Wand eingelassen ist, wobei das elastisch verformbare Blatt oder die Federplatte (1) quer im Innern des Ventilgehäuses (10) eingesetzt ist, die an ihrem Umfang zwischen zwei Schultern oder Einfassungen (3,4) festgehalten wird, die einen haltenden Rahmen bilden, durch den der kreisförmige Umfang der Federplatte blockiert ist, und die im Innern der Bohrung der Hülse (10) verankert ist, und daß andererseits das Ventil eine Anzahl von Einstell- oder Verschlußteilen (16, 16', 16', 17, 17', 17'', 18, 18','18'') aufweist, die zumindest in Höhe des Spaltes (5) zu einer Seite der Federplatte weisen und die aktive Länge des Spaltes verkürzen können, der zumindest teilweise durch die Einstell- oder Verschlußteile verkeilt und gesperrt ist, die einzeln oder zu mehreren abnehmbar sind, so daß sich die Bewegungsfreiheit der Federplatte, die Ansprechschwelle sowie die Federplattenöffnung nach den Druckdifferenzen einstellen läßt.

2. Ventil nach Anspruch 1, dadurch gekennzeichnet, daß die das Ventilgehäuse bildenden Innen- und Außenwände der Hülse Gewinde aufweisen, die zur Aufnahme von Aussenbefestigungsmitteln wie Ringe (11, 14) und Einfassungen (3, 4) geeignet sind, die den inneren den Umfang der Federplatte sperrenden Rahmen bilden.

3. Ventil nach einem der Ansprüche 1 oder 2, dadurch gekennzeichnet, daß die Einstell- oder Verschlußteile aus mehreren Kreisen (18, 18', 18'') bestehen, die von einander unabhängig sind und sich dennoch gegenseitig sperren, wobei jeder Kreis ausgehend vom mittigsten Kreis herausnehmbar ist, wodurch der aktive Durchmesser des Spaltes vergrössert und demzufolge die Druckschwelle gesenkt wird, wodurch das Ventil dazu veranlaßt werden kann, sich von der gegenüberliegenden Wand her zu öffnen.

4. Ventil nach einem der Ansprüche 1, 2 oder 3, dadurch gekennzeichnet, daß die Einstelloder Verschlußteile sich beispielshalber durch ein leichtes Anlaufen der gegenüberliegenden Wand, das sich ihrer spontanen Freigabe widersetzt, gegenseitig blockieren und dabei jedoch durch einfaches Ziehen zwangsschlüssig freigesetzt werden können.

5. Ventil nach dem vorhergehenden Anspruch 3, dadurch gekennzeichnet, daß die Einstell- oder Verschlußteile als konzentrische Ringe aus Kunstoff gefertigt sind, die als ein Stück formgepreßt und über Materialbrücken verbunden sind, die von der Bedienungsperson bei Inbetriebnahme zerbrochen werden können, um ausgehend vom mittleren Kreis einen oder mehrere dieser Kreise freizusetzen, wobei die Freisetzung der Kreise die aktive Länge des Spelts und demzufolge die Ansprech-Schwelle des Ventils bestimmt.

6. Ventil nach einem der Ansprüche 1 bis 5, dadurch gekennzeichnet, daß die Einstell- oder Verschlußteile (18, 18') Einrastmittel wie eine Kerbe oder Rille (19, 19') aufweisen, so daß sie von der Bedienungsperson freigesetzt werden können.

7. Ventil nach einem der Ansprüche 1 bis 6, dadurch gekennzeichnet, daß die Federplatte aus Silikonelastomer gefertigt ist und eine Dicke zwischen 2 und 7 mm aufweist.

8. Ventil nach einem der Ansprüche 1 bis 7, dadurch gekennzeichnet, daß die Hülse (10) von einer Umhüllung (11) bedeckt ist, die mit einer mittigen Wanne (20) versehen ist, die eine Ausnehmung (23) zur Hindurchführung eines Stößels (8) aufweist, der von einer Feder (9) in eine äußere Stellung zurückgeholt und in eine Ruhestellung zur Federplatte freigesetzt wird, wobei der Stößel (8) sich zur Federplatte zurückdrücken läßt, um diese zu veranlassen, sich zu öffnen und auf Wunsch eine Verbindung zwischen den beiden durch die Federplatte getrennten Medien herzustellen, wobei die Umhüllung (11) sich dem Eindringen von Fremdniederschlag oder körpern im Ventilgehäuse widersetzt und dabei öffnungen cder Kanäle (21, 21) aufweist, über die eine Seite der Federplatte mit dem ihr entsprechenden Medium in Verbindung gesetzt wird.

9. Ventil nach Anspruch 8, dadurch gekennzeichnet, daß die Umhüllung (11) in ihrem Umfang so ausgestaltet ist, daß sie das Hülsenende (10) umhüllt, auf dem die mit öffnungen (21, 21') ausgebildete Umhüllung aufliegt, wobei das Hülsenende Kanäle (22, 22) aufweist, durch die das äußere Medium mit einer Seite der Federplatte in Verbindung gesetzt wird.

**Claims**

1. Valve of the double effect type adapted to be interposed between two media (7, 7') which are capable of relative variations in pressure, the valve ensuring isolation of the two media (7, 7') with respect to each other below a relative pressure difference corresponding to a determined threshold, the valve ensuring, on the contrary, the communication between the two media (7, 7') beyond a pressure difference exceeding said threshold, of the type comprising a sheet (1) of elastically deformable material, provided with a slot (5), each face (2, 2') of the sheet (1) being in communication with one of the two media (7, 7'), the deformation of the sheet (1) under the effect of the pressure difference between the two faces, beyond a certain value, causing opening of the slot (5) and communication of the two media (7, 7'), characterized on the one hand in that it is constituted by a valve body forming sleeve (10) inserted, with interposition of sealing means (12), in a slot of corresponding format and made in the wall separating the two media, the elastically deformable sheet or membrane (1) being placed in position transversely inside said valve body (10), this membrane being imprisoned by its periphery between two shoulders such as rings (3, 4) forming a holding frame blocking the circular perimeter of the membrane, and connected inside the bore of the sleeve (10), and, on the other hand in that it comprises a plurality of adjusting members (16, 16', 16", 17, 17', 17", 18, 18', 18") bearing on one face of the membrane at least at the level of slot (5) and adapted to reduce the active length of said slot of which part is adjusted blocked by said adjusting members, said latter being provided to be removable and the removal of one or more adjusting members making it possible to adjust the freedom of movement of the membrane and the threshold of response and of opening of the latter at the pressure differences.

2. Valve according to Claim 1, characterized in that the inner and outer walls of the sleeve forming valve body comprise threads adapted to receive the outer fixing elements such as rings (11, 14) and the rings (3, 4) forming inner frame for peripheral blocking of the membrane.

3. Valve according to one of Claims 1 or 2, characterized in that the adjusting members are constituted by a plurality of circles (18, 18', 18") which are independent of one another, whilst being mutually blocked in removable manner, the removal of each circle, from the most central circle, increasing the active diameter of the slot, and consequently lowering the pressure threshold adapted to provoke opening of the valve from the opposite wall.

4. Valve according to Claim 1, 2 or 3, characterized in that the adjusting members are blocked mutually for example by a slight tapering of their opposite wall, opposing spontaneous disengagement thereof, whilst allowing their disengagement by force by simple traction.

5. Valve according to Claim 3 hereinabove, characterized in that the adjusting members are formed by concentric circles made of synthetic material and they are cast in one piece, remaining connected by bridges of material capable of being broken by the user at the moment of use, in order to disengage one or more of the circles from the central circle, the disengagement of the circles defining the active length of the slot and consequently the response threshold of the valve.

6. Valve according to one of Claims 1 to 5, characterized in that the adjusting members (18, 18') comprise holding means such as a notch or groove (19, 19') allowing disengagement thereof by the user.

7. Valve according to one of Claims 1 to 6, characterized in that the membrane is made of silicon elastomer and its thickness is included between 2 and 7 mm.

8. Valve according to one of Claims 1 to 7, characterized in that the sleeve (10) is covered with a cover (11) provided with a central dish (20) itself pierced with a slot (23) for the passage and guiding of a push element or plunger finger (8) returned by a spring (9) into an outer position and disengaged with respect to the membrane in rest position, the finger (8) being adapted to be pushed towards the membrane in order to provoke opening of the latter and to obtain a voluntary communication between the two media separated by said membrane, the cover (11) opposing penetration of precipitations or foreign bodies in the valve body and comprises openings or channels (21, 21') for communication of one face of the membrane with the medium which corresponds thereto.

9. Valve according to Claim 8, characterized in that the cover (11) comprises a peripheral sight hole enveloping the end of the sleeve (10) on which said cover abuts and provided with openings (21, 21'), the end of the sleeve comprising channels (22, 22') for communication of the outer medium with one face of the membrane.

*Fig. 1*

*Fig. 2*

*Fig. 3*

*Fig. 4*